# FASCICULE DE BREVET EUROPEEN

(11) **EP 2 137 044 B1**
(45) Date de publication et mention de la délivrance du brevet: **05.06.2013**
(21) Numéro de dépôt: 08788108.2
(22) Date de dépôt: 02.04.2008
(51) Int. Cl.: B60W 30/18, B60T 7/12

(54) **PROCEDE D'AIDE AU DEMARRAGE EN COTE ET DISPOSITIF ASSOCIE**
VERFAHREN ZUR ANFAHRHILFE AN EINER STEIGUNG UND ZUGEHÖRIGE VORRICHTUNG
HILL START ASSISTANCE METHOD AND ASSOCIATED DEVICE

(30) Priorité: 19.04.2007 FR 0754565
(43) Date de publication de la demande: 30.12.2009
(73) Titulaire: Renault SAS, 92100 Boulogne Billancourt (FR)
(72) Inventeur: MALLET, Mickaël, F-78180 Montigny-le-Bretonneux (FR)
(86) Numéro de dépôt international: PCT/FR2008/050583
(87) Numéro de publication internationale: WO 2008/145876

(56) Documents cités:
- WO-A-01/58714
- DE-A1- 10 151 846
- DE-A1- 10 154 633
- DE-A1-102004 060 255

## Description

### DOMAINE TECHNIQUE

L'invention concerne un procédé d'aide au démarrage, notamment pour un véhicule.

En particulier, elle se rapporte à une amélioration d'un système d'aide au démarrage en côte (en anglais, « *Hill Start Assistant* », (HSA)).

Sur les véhicules actuels, le démarrage en côte est source de stress pour le conducteur qui cherche autant que possible à limiter le recul du véhicule lors d'un tel démarrage.

Généralement, le conducteur déplace, le plus vite possible son pied de la pédale de frein à la pédale d'accélérateur pour pouvoir démarrer.

On connaît des solutions qui permettent d'éviter cette source de stress.

Ces solutions évitent le recul du véhicule en utilisant le système de freinage. Il convient toutefois que le véhicule soit libéré au bon moment.

Les dispositifs du type HSA permettent lorsque le conducteur relâche la pédale de frein, de maintenir la pression dans le système de freinage pendant une temporisation de durée typiquement égale à deux secondes.

Il faut toutefois que le conducteur ait suffisamment relevé la pédale de frein pour déclencher la temporisation.

Dans certaine solution, le dispositif HSA enregistre la pression la plus élevée appliquée par le conducteur au moyen d'une pédale de frein vers un maître-cylindre en liaison avec le système de freinage du véhicule et la maintien dans le système de freinage de sorte que le véhicule soit maintenu en position stationnaire. Cependant, si le conducteur applique une très forte pression et qu'il repose son pied sur la pédale de frein (appui léger), à la fin de la temporisation, la pression du système de freinage est violemment relâchée, en particulier vers le maître cylindre pour libérer le véhicule. Ceci peut occasionner une dégradation du ressenti à la pédale de frein par le conducteur. Ceci peut occasionner une dégradation du ressenti à la pédale de frein par le conducteur. Des documents brevet WO01/58714A et De10151846, sont également connus des procédés d'aide au démarrage en côte.

### PRESENTATION DE L'INVENTION

L'invention propose de remédier aux problèmes susmentionnés en proposant selon un premier aspect, un procédé d'aide au démarrage en côte d'un véhicule maintenu en position stationnaire au moyen d'un système de freinage, délivrant une pression de freinage, ledit système de freinage étant en liaison avec un maître-cylindre, piloté par une pression transmise par un utilisateur au moyen d'une pédale de frein.

Le procédé comprend en outre à l'issue d'une détection du relâchement de la pression de la pédale de frein au moyen d'un capteur de pression les étapes successives suivantes
- déclenchement d'une temporisation,
- calcul d'une pression minimale de maintien du véhicule en position stationnaire,
- régulation de la pression de freinage au moyen du système de freinage, de sorte qu'au plus tard à l'issue de la temporisation la pression de freinage soit égale à une pression cible au moins égale à la pression minimale de maintien du véhicule en position stationnaire.

D'autres aspects du procédé sont les suivants
- la régulation de la pression de freinage consiste à faire décroître progressivement; a partir du déclenchement de la temporisation, la pression de freinage dans le système de freinage, ledit système agissant comme régulateur de pression ;
- la pression cible est égale à la pression minimale de maintien ;
- au cours de la régulation de la pression de freinage, si une pression appliquée est détectée comme inférieure à la pression minimale de maintien, alors la pression cible est actualisée à la pression appliquée par l'utilisateur ;
- à l'issue de la temporisation la pression de freinage dans le système de freinage est relâchée ;
- la temporisation est de durée égale à deux secondes ;
- la régulation (50) de la pression de freinage est une décroissance linéaire.
- la régulation est une fonction linéaire d'au moins la pression de freinage appliquée, de la pression minimale de maintien et de la durée de la temporisation ;
- la pression minimale de maintien du véhicule en position stationnaire est au moins fonction de la pente, du régime du moteur, du type de rapport de boite engagé.

L'invention propose en outre selon un second aspect, un dispositif d'aide au démarrage en côte, comprenant des moyens aptes à mettre en oeuvre un procédé d'aide au démarrage en côte selon le premier aspect de l'invention.

### PRESENTATION DES FIGURES

D'autres caractéristiques et avantages de l'invention ressortiront encore de la description qui suit laquelle est purement illustrative et non limitative et doit être lue en regard des dessins annexés sur lesquels :
- la figure 1 illustre un organigramme du procédé de l'invention,
- la figure 2 illustre schématiquement le système de freinage dans lequel le procédé s'intègre,
- la figure 3 illustre les variations des paramètres du procédé selon un premier mode de mise en oeuvre,
- la figure 4 illustre les variations des paramètres du procédé selon un second mode de mise en oeuvre.

### DESCRIPTION DE L'INVENTION

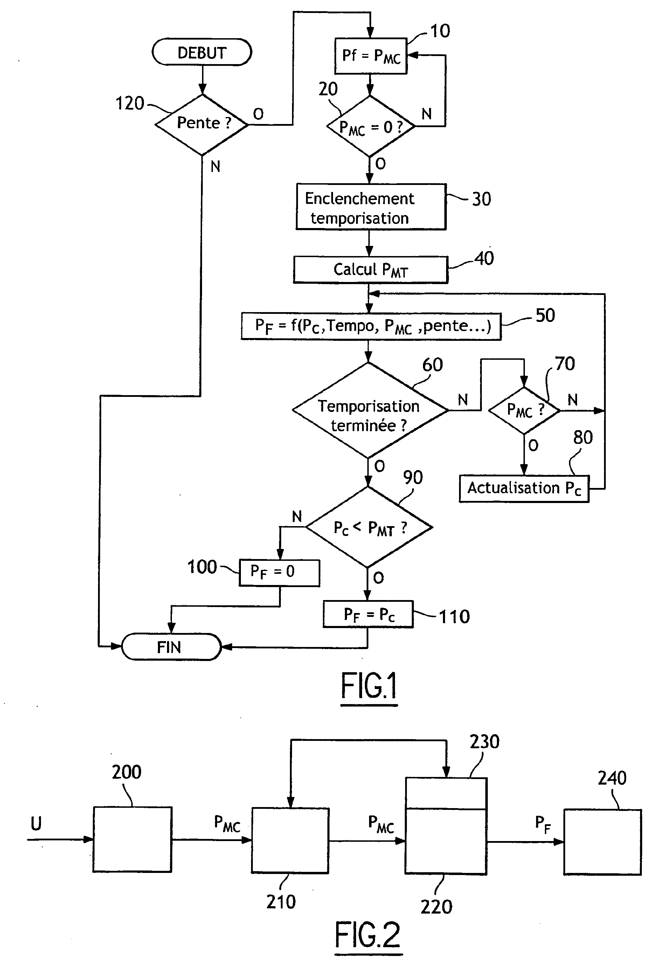

La figure 1 illustre un organigramme du procédé d'aide au démarrage en côte de l'invention.
La figure 2 illustre schématiquement l'architecture du système de freinage autour de laquelle le procédé s'intègre.

Le procédé de l'invention s'intègre dans un système global dont l'architecture matérielle comprend un système de freinage hydraulique (220) de type connu *« Electronic Stability Program »* (ESP) qui permet de piloter les pressions sur chaque étrier 240 et qui est équipé au moins d'un capteur de pression maître-cylindre 230, d'un module de mesure de la pente, du régime moteur, de la vitesse des roues, des positions des pédales d'accélérateur et d'embrayage, une information sur le type de rapport de boîte engagé (marche avant, marche arrière, neutre) et un ou des moyens électroniques de calcul.

On comprend par conséquent que le système de freinage agit comme un régulateur de pression.

Telle que connu en soi, l'aide au démarrage en côte se met en marche lorsque d'une part le véhicule est en position stationnaire et que le système de freinage 250 a détecté 120 que le véhicule est effectivement en position stationnaire dans une côte.

Le procédé permet de maintenir le véhicule en position stationnaire au moyen d'un système de freinage 220, délivrant une pression de freinage P_{F}.

Le système de freinage 220 est en liaison avec un maître-cylindre 210, piloté par une pression P_{MC} transmise par un conducteur U au moyen d'une pédale de frein 200.

La pression P_{F} est communiquée aux étriers de freins 240 assurant le blocage des roues du véhicule.

Par ailleurs, le procédé nécessite la connaissance de la mesure de la pente, du régime moteur, de la vitesse des roues, des positions des pédales d'accélérateur et d'embrayage. Il doit aussi disposer d'une information sur le type de rapport de boîte engagé (marche avant, marche arrière, neutre).

Ces informations sont disponibles via le système de freinage ESP 220.

Il est à noter que la position stationnaire doit être conservée pendant au moins une durée de temporisation.

Le procédé de l'invention utilise un capteur de pression maître-cylindre 230 qui va détecter 20 le moment où le conducteur va relâcher la pression P_{MT} sur la pédale de frein 200.

A l'issue de cette détection 20 une temporisation 30 est déclenchée.

De manière non limitative, cette temporisation 30 a une durée égale à deux secondes.

Suite au déclenchement 30 de la temporisation, le procédé calcule 40 une pression minimale de maintien P_{MT} du véhicule en position stationnaire.

Cette pression P_{MT} dépend de la pression maximale appliquée par le conducteur, de la pente, de la masse du véhicule et des caractéristiques du système de freinage.

En d'autres termes, la pression P_{MT} dépend des caractéristiques instantanées du véhicule au moment où l'assistance au démarrage en côte débute 120.

A ce stade, la pression dans le circuit de freinage P_{F} est toujours égale à la pression P_{MC} appliquée par le conducteur sur la pédale de frein 200 et transmise au maître-cylindre 210.

Comme déjà discuté, tel que connu en soi, à l'issue de la temporisation la pression de freinage sera relâchée ce qui peut provoquer un retour violent de la pédale de frein 200, par l'intermédiaire du maître cylindre 210 en liaison avec la pédale de frein 200 notamment lorsque le conducteur U exerce toujours une pression sur la pédale de frein 200.

Afin d'éviter cet aspect nuisible, au cours de la temporisation, le procédé va initier une régulation 50 la pression de freinage P_{F} au moyen du système de freinage, de sorte qu'au plus tard à l'issue de la temporisation la pression de freinage P_{F} soit égale à une pression cible P_{c} au minimum égale à la pression minimale de maintien P_{MT} du véhicule en position stationnaire.

Ainsi, d'une part au cours de la temporisation la pression de freinage sera forcément supérieure à la pression minimale de maintien ce qui assure que le véhicule soit en position stationnaire objectif d'un dispositif d'aide au démarrage en côte.

Et d'autre part, l'intérêt est qu'au plus tard à l'issue de la temporisation, à l'instant précédent le relâchement du frein, c'est-à-dire du relâchement de la pression P_{F} dans le circuit de freinage 230 celle-ci sera suffisamment faible pour limiter au strict minimum le retour de la pression dans le maître-cylindre 210 nuisible pour le conducteur puisque dégradant le ressenti à la pédale.

Il est à noter que la régulation 50 de la pression de freinage P_{F} consiste à faire décroître progressivement la pression de freinage P_{F} dans le système de freinage 220.

Il peut s'agir notamment d'une décroissance linéaire.

Cette décroissance linéaire peut en particulier être une fonction linéaire d'au moins la pression de freinage appliquée, de la pression minimale de freinage et de la durée de la temporisation.

Par ailleurs, la pression cible P_{C} peut être égale à la pression minimale de maintien P_{MT} du véhicule en position stationnaire.

Ceci présente notamment un intérêt lorsque le conducteur U au cours de la temporisation réinitie une pression sur la pédale de frein 200.

Ainsi selon une variante de réalisation, au cours de la temporisation au cours de laquelle la pression de freinage P_{F} est régulée le procédé va détecter 70 au moyen du capteur maître-cylindre 220 un appui sur la pédale de frein 200 par l'utilisateur.

Si cette pression P_{MC} est inférieure à la pression de maintien minimale P_{MT} du véhicule calculée 40 la pression cible P_{C} vers laquelle la pression de freinage P_{F} évolue sera actualisée à cette nouvelle valeur.

Dans le cas contraire aucune actualisation n'aura lieu afin de ne pas affecter le ressenti à la pédale par le conducteur U.

Ainsi selon cette variante à l'issue de la temporisation la pression de freinage P_{F} sera égale à cette nouvelle valeur.

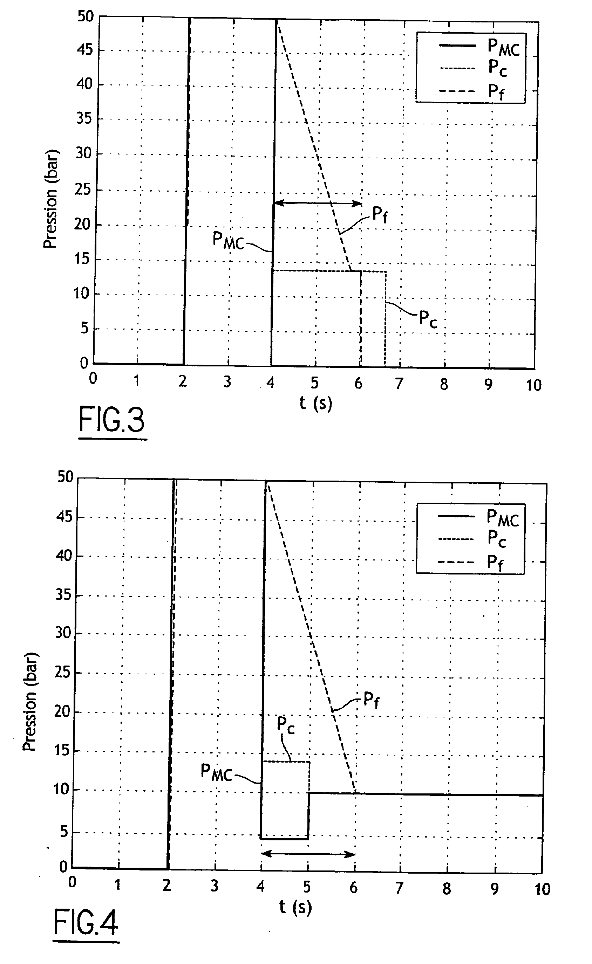

La figure 3 se réfère à un mode de réalisation lorsque le conducteur ne réinitie pas de pression durant la temporisation.

Lorsque le conducteur U relâche la pression de la pédale de frein 200 la pression cible P_{c} prend la valeur de la pression minimale de maintien P_{MT} du véhicule en position stationnaire.

La pression de freinage P_{F} décroît progressivement vers la pression cible. L'objectif étant de permettre une réponse plus rapide lorsque le véhicule va quitter sa position stationnaire.

A l'issue de la temporisation, de durée égale à deux secondes la pression de freinage P_{F} est libérée afin que le véhicule puisse quitter sa position stationnaire.

La valeur de pression cible P_{c} reste à la valeur de maintien P_{MT} pendant la durée du desserrage des freins puis est réinitialisée.

La figure 4 se réfère à un deuxième mode de réalisation, notamment lorsque le conducteur initie une pression sur la pédale de pression au cours de la temporisation.

Le conducteur applique la pression dans le maître-cylindre P_{MC} et immobilise le véhicule, relâche la pression sur la pédale de frein et applique à nouveau une faible pression inférieure à la pression de maintien minimale du véhicule en position stationnaire.

Dès que le conducteur relâche la pression, la pression cible P_{c} est réévaluée à la pression de maintien minimale (qui dépend notamment de la pente et qui vaut ici, 14 bars environ).

Pendant la période où le conducteur ne freine plus, la pression de freinage P_{F} diminue progressivement selon une pente paramétrable (ici 20 bar/s) vers la pression cible P_{c}.

Lorsque le conducteur applique à nouveau une pression de freinage, la pression cible P_{c} est actualisée à la valeur P_{MC} appliquée par le conducteur et la pression continue de diminuer progressivement.

Sans cette évolution, après les 2 secondes de temporisation, la pression était relâchée soudainement pouvant générer un effort à la pédale particulièrement violent.

En particulier, selon le procédé de l'invention, la pression est relâchée de manière à atteindre cette pression progressivement afin que l'effort à la pédale évolue progressivement.

Ainsi, le procédé de l'invention permet la libération de la pression de freinage de telle sorte que si le conducteur a toujours le pied sur la pédale de frein, il ne ressente pas ou très peu la variation de pression sous son pied.

En outre, la pression dans le circuit de freinage est libérée sans dégrader la pression jusqu'au niveau requis pour assurer le maintien du véhicule dans la pente.

La pression étant la plus proche de la valeur nécessaire au maintien du véhicule, cela doit permettre d'améliorer la phase au cours de laquelle le véhicule va quitter sa position stationnaire en réduisant la durée du desserrage des étriers de freins 260 pour libérer les roues du véhicule.

## Revendications

1. Procédé d'aide au démarrage en côte d'un véhicule maintenu en position stationnaire au moyen d'un système de freinage (220), délivrant une pression de freinage (P_{F}), ledit système de freinage (220) étant en liaison avec un maître-cylindre (210), piloté par une pression (P_{MC}) transmise par un utilisateur (U) au moyen d'une pédale de frein (200), **caractérisé en ce que** ledit procédé comprend, à l'issue d'une détection (20) du relâchement de la pression (P_{MC}) de la pédale de frein (200) au moyen d'un capteur de pression (220) les étapes successives suivantes :
- déclenchement (30) d'une temporisation,
- calcul (40) d'une pression minimale de maintien (P_{MT}) du véhicule en position stationnaire,
- régulation (50) de la pression de freinage (P_{F}) au moyen du système de freinage (220), de sorte à faire décroître progressivement, a partir du déclenchement de la temporisation, ladite pression de freinage (P_{F}) dans le système de freinage (220), ledit système agissant comme régulateur de pression et de sorte qu'au plus tard à l'issue de la temporisation la pression de freinage (P_{F}) soit égale à une pression cible (P_{c}) au moins égale à la pression minimale de maintien (P_{MT}) du véhicule en position stationnaire.

2. Procédé selon l'une des revendications précédentes, **caractérisé en ce que** la pression cible est égale à la pression minimale de maintien (P_{MT}).

3. Procédé selon l'une des revendications 1 à 2, **caractérisé en ce que** au cours de la régulation (50) de la pression de freinage (P_{F}), si une pression (P_{MC}) appliquée par l'utilisateur (U) est détectée (70) comme inférieure à la pression minimale de maintien (P_{MT}), alors la pression cible (P_{c}) est actualisée (80) à la pression appliquée par l'utilisateur (U).

4. Procédé selon l'une des revendications 1 à 2, **caractérisé en ce que** à l'issue de la temporisation (90) la pression de freinage (P_{F}) dans le système de freinage est relâchée (100).

5. Procédé selon l'une des revendications précédentes, **caractérisé en ce que** la temporisation est de durée égale à deux secondes.

6. Procédé selon l'une des revendications précédentes, **caractérisé en ce que** la régulation (50) de la pression de freinage est une décroissance linéaire.

7. Procédé selon la revendication précédente, **caractérisé en ce que** la régulation est une fonction linéaire d'au moins la pression de freinage appliquée, de la pression minimale de maintien et de la durée de la temporisation.

8. Procédé selon l'une des revendications précédentes, **caractérisé en ce que** la pression minimale de maintien du véhicule en position stationnaire est au moins fonction de la pente, du régime du moteur, du type de rapport de boite engagé.

9. Dispositif d'aide au démarrage en côte, **caractérisé en ce qu'**il comprend des moyens aptes à mettre en oeuvre un procédé d'aide au démarrage en côte selon l'une des revendications précédentes.

## Patentansprüche

1. Verfahren zur Berganfahrhilfe für ein Fahrzeug, das mittels eines Bremssystems (220), das einen Bremsdruck (P_{F}) liefert, in einer stationären Position gehalten wird, wobei das Bremssystem (220) mit einem Hauptbremszylinder (210) in Verbindung steht, der durch einen von einem Benutzer (U) mittels eines Bremspedals (200) übertragenen Druck (P_{MC}) vorgesteuert wird, **dadurch gekennzeichnet, dass** das Verfahren nach einer Detektion (20) des Lösens des Drucks (P_{MC}) des Bremspedals (200) mittels eines Drucksensors (220) die folgenden aufeinander folgenden Schritte aufweist:
- Auslösung (30) einer Verzögerung,
- Berechnung (40) eines minimalen Haltedrucks (P_{MT}) zum Halten des Fahrzeugs in einer stationären Position,
- Regelung (50) des Bremsdrucks (P_{F}) mittels des Bremssystems (220), derart, dass ab der Auslösung der Verzögerung eine allmähliche Verringerung des Bremsdrucks (P_{F}) in dem Bremssystem (220) bewirkt wird, wobei das System als Druckregler wirkt, und derart, dass spätestens nach Ablauf der Verzögerung der Bremsdruck (P_{F}) gleich einem Zieldruck (P_{C}) ist, der mindestens gleich dem minimalen Haltedruck (P_{MT}) zum Halten des Fahrzeugs in einer stationären Position ist.

2. Verfahren nach dem vorhergehenden Anspruch, **dadurch gekennzeichnet, dass** der Zieldruck gleich dem minimalen Haltedruck (P_{MT}) ist.

3. Verfahren nach einem der Ansprüche 1 bis 2, **dadurch gekennzeichnet, dass**, falls im Verlaufe der Regelung (50) des Bremsdrucks (P_{F}) ein von dem Benutzer (U) ausgeübter Druck (P_{MC}) als kleiner als der minimale Haltedruck (P_{MT}) detektiert wird (70), der Zieldruck (P_{c}) dahingehend aktualisiert wird (80), dass er gleich dem von dem Benutzer (U) ausgeübten Druck ist.

4. Verfahren nach einem der Ansprüche 1 bis 2, **dadurch gekennzeichnet, dass** nach Ablauf der Verzögerung (90) der Bremsdruck (P_{F}) in dem Bremssystem gelöst wird (100).

5. Verfahren nach einem der vorhergehenden Ansprüche, **dadurch gekennzeichnet, dass** die Verzögerung eine Dauer von zwei Sekunden aufweist.

6. Verfahren nach einem der vorhergehenden Ansprüche, **dadurch gekennzeichnet, dass** die Regelung (50) des Bremsdrucks einer linearen Abnahme entspricht.

7. Verfahren nach dem vorhergehenden Anspruch, **dadurch gekennzeichnet, dass** die Regelung eine lineare Funktion mindestens des ausgeübten Bremsdrucks, des minimalen Haltedrucks und der Dauer der Verzögerung ist.

8. Verfahren nach einem der vorhergehenden Ansprüche, **dadurch gekennzeichnet, dass** der minimale Druck zum Halten des Fahrzeugs in einer stationären Position mindestens von dem Anstieg, von der Motordrehzahl und vom Typ des eingelegten Gangs abhängig ist.

9. Vorrichtung zur Berganfahrhilfe, **dadurch gekennzeichnet, dass** sie Mittel aufweist, die geeignet sind, ein Verfahren zur Berganfahrhilfe nach einem der vorhergehenden Ansprüche durchzuführen.

## Claims

1. Hill start assistance method for a vehicle in a stationary position by means of a braking system (220) delivering a braking pressure (P_{B}), said braking system (220) being connected to a master cylinder (210), driven by a pressure (P_{MC}) transmitted by a user (U) by means of a brake pedal (200), **characterized in that** said method comprises, after a pressure sensor (220) has detected (20) that the pressure (P_{MC}) of the brake pedal (200) has been released, the following successive steps:
- the starting (30) of a timer,
- the calculation (40) of a minimum maintaining pressure (P_{MT}) for maintaining the vehicle in a stationary position,
- the regulating (50) of the braking pressure (P_{B}) by means of the braking system (220), so as to cause said braking pressure (P_{B}) in the braking system (220) to decrease progressively from the starting of the timer, said system acting as a pressure regulator and so as, at the latest at the end of the timed period, the braking pressure (P_{B}) is equal to a target pressure (P_{T}) at least equal to the minimum maintaining pressure (P_{MT}) maintaining the vehicle in a stationary position.

2. Method according to the preceding claim, **characterized in that** the target pressure is equal to the minimum maintaining pressure (P_{MT}).

3. Method according to either of Claims 1 and 2, **characterized in that** during the regulating (50) of the braking pressure (P_{B}), if a pressure (P_{MC}) applied by the user (U) is detected (70) as being lower than the minimum maintaining pressure (P_{MT}), then the target pressure (P_{T}) is updated (80) to the pressure applied by the user (U).

4. Method according to either of Claims 1 and 2, **characterized in that**, at the end of the timed period (90), the braking pressure (P_{B}) in the braking system is released (100).

5. Method according to one of the preceding claims, **characterized in that** the timed period lasts for two seconds.

6. Method according to one of the preceding claims, **characterized in that** the regulating (50) of the braking pressure follows a linear decrease.

7. Method according to the preceding claim, **characterized in that** the regulation is a linear function of at least the applied braking pressure, the minimum maintaining pressure, and the length of the timed period.

8. Method according to one of the preceding claims, **characterized in that** the minimum maintaining pressure for maintaining the vehicle in a stationary position is at least a function of the slope, of the engine speed, of the type of gear ratio engaged.

9. Hill start assistance device, **characterized in that** it comprises means capable of implementing a hill start assistance method according to one of the preceding claims.
